# EUROPÄISCHE PATENTSCHRIFT

(11) **EP 2 113 490 B1**
(45) Veröffentlichungstag und Bekanntmachung des Hinweises auf die Patenterteilung: **12.09.2012**
(21) Anmeldenummer: 09005865.2
(22) Anmeldetag: 28.04.2009
(51) Int. Cl.: C02F 9/02, C02F 103/16, C02F 101/20

(54) **Verfahren und Vorrichtung zur mechanischen Auftrennung von Sekundärrohrstoffen aus eisenhaltigen Schlämmen**
Method and device for mechanical separation of secondary raw materials from sludge containing iron
Procédé et dispositif de séparation mécanique de matières brutes secondaires à partir des boues contenant du fer

(30) Priorität: 28.04.2008 DE 102008021139; 20.10.2008 EP 08013654
(43) Veröffentlichungstag der Anmeldung: 04.11.2009
(73) Patentinhaber: Bonnaire, Edgar, 66809 Nalbach (DE); Bonnaire, Marco, 66809 Nalbach (DE); Müller, Paul, 66701 Beckingen (DE)
(72) Erfinder: Bonnaire, Edgar, 66809 Nalbach (DE); Bonnaire, Marco, 66809 Nalbach (DE); Müller, Paul, 66701 Beckingen (DE)
(74) Vertreter: Mai, Oppermann & Partner i.L.

(56) Entgegenhaltungen:
- EP-A- 0 080 589
- EP-A- 0 513 809
- DE-A1- 19 915 724
- US-A- 2 514 958

## Beschreibung

Die Erfindung betrifft ein mechanisches Verfahren zur Auftrennung von Sekundärrohstoffen aus eisenhaltigen Schlämmen, welche auch Sperrstoffe jeglicher Art und auch größere Eisenteile mit Ausmaßen größer 30 mm enthalten können, insbesondere auch als Ausgangsmaterial, das nicht pumpfähig ist, insbesondere ölhaltigen Walzzunderschlämmen sowie eine Vorrichtung zur Durchführung dieses Verfahrens und die Verwendung der aufgetrennten Sekundärrohstoffe.

Verfahren zum Auftrennen von Sekundärrohstoffen aus eisenhaltigen Schlämmen sowie entsprechende Vorrichtungen zur Durchführung dieser Verfahren sind bereits bekannt.

So wird in der DE 41 15 920 A1 ein Verfahren und eine Vorrichtung zur Reinigung körniger Materialien von fettigen Substanzen, insbesondere Öl beschrieben, wobei die Materialien einer Attrition unterworfen werden und nach Zugabe von Waschflüssigkeit in einer mehrstufigen Zyklonstufe behandelt werden. Bei der Durchführung des dort angegebenen Verfahrens tritt ein überdurchschnittlicher Verschleiß innerhalb der Vorrichtung auf, auch ist die dort angegebene Verwendung von oberflächenaktivem Reagenzien (Tenside und Dispergatoren) nachteilig, da diese Stoffe umweltschädigend sind und mittels aufwendiger Verfahren zurückgewonnen und/oder entsorgt werden müssen. Auch ist das Verhältnis Wasser zu festem Material außerordentlich hoch.

In der DE 24 29 165 A1 wird ein Verfahren und eine Vorrichtung zur Behandlung von Abwasserschlamm aus Wasserbehandlungssystemen eines Hüttenwerks beschrieben. Auch bei dem in dieser Offenlegungsschrift beschriebenen Verfahren treten leicht Störungen und Schäden innerhalb der Vorrichtung auf, vielfach muss das Verfahren unterbrochen werden, weil Verstopfungen auftreten und schließlich ist auch der Einsatz von Lösungsmitteln, welche Öl und Schmiermittel lösen sollen, von Nachteil.

Auch das in der DE 31 46 809 C1 beschriebene Verfahren zur Reduzierung des Ölgehaltes von ölverschmutztem Walzsinter ist kompliziert und arbeitet mit einem Waschmittel, nämlich mit oberflächenaktiven Tensiden, wie sich aus dem Hinweis auf die DE 30 43 220 C2 in diesem Deutschen Patent ergibt, siehe dort Spalte 3, Zeilen 64-66. Außerdem setzt das dort beschriebene Verfahren ein pumpfähiges Material voraus.

In der Deutschen Auslegeschrift 25 32 689 wird ein Verfahren und eine Vorrichtung zum Behandeln von Walzzunder beschrieben, das ebenfalls mit einem Lösungsmittel arbeitet, das zurückgewinnen und ggf. entsorgt werden muss. Als Lösungsmittel werden hier insbesondere die Verbindungen organischer Natur wie fluorierte Chlorkohlenwasserstoffe verwendet. Der Aufwand an thermischer Energie ist hoch.

Auch das in der EP 0 373 577 A1 beschriebene Verfahren und die dafür eingesetzte Vorrichtung sind kompliziert, ferner ist bei dem dort beschriebenen Verfahren ebenfalls der Einsatz erheblicher Mengen an thermischer Energie erforderlich.

Auch das in der DE 38 16 493 A1 beschriebene Verfahren zur Zerlegung eines Ausgangsproduktes, vorzugsweise Walzzunder in seine Bestandteile arbeitet mit einem erheblichen Aufwand an thermischer Energie.

Das gleiche gilt bezüglich der thermischen Energie für die Verfahren und Anlagen, welche in der DE 197 13 714 A1 und DE 197 15 839 A1 beschrieben werden.

In der EP 0 080 589 A1 wird ein Verfahren und eine Anlage zur Reinigung von mit fettigen Substanzen, insbesondere Öl, verschmutztem Walzzunder und zur Gewinnung von Erdöl aus ölhaltigen Mineralien beschrieben. Dabei wird das Material zunächst einer festkörpermechanischen Beanspruchung unterworfen und dann in einer Flotation gewaschen. Als Waschmittel wird Waschdetergentien enthaltendes Wasser verwendet.

Obwohl bereits eine ganze Reihe von Verfahren und Vorrichtungen zur Auftrennung von Sekundärrohstoffen aus Abfällen wie eisenhaltigen Schlämmen oder Walzzunder bekannt sind, besteht noch ein Bedürfnis nach verbesserten Verfahren und entsprechenden Vorrichtungen.

Aufgabe der Erfindung ist es deshalb ein Verfahren zur Verfügung zu stellen, das gegenüber den bekannten Verfahren verbessert ist und insbesondere ohne den Einsatz von die Umwelt schädigenden Tensiden auskommt, das im Wesentlichen nur unter Einsatz von mechanischer Energie auskommt und nicht auf die Zufuhr von thermischer Energie angewiesen ist und das die Auftrennung von Sekundärrohstoffen ermöglicht, welche direkt bei der Eisenverhüttung eingesetzt werden, nämlich als Sekundärrohstoffe ohne weitere Behandlung über die Sinteranlage der Eisenverhüttung direkt zugeführt werden können bzw. als Filterkuchen über die Kohlenmahlanlage zur Kohleneindüsung. Aufgabe der Erfindung ist es ferner, ein Verfahren zur Verfügung zu stellen, das umweltschonend und im Wesentlichen autark und recourcenschonend arbeitet und bei dem auch das benötigte Prozesswasser für das gesamte Verfahren mittels Pumpen aus der Pumpenvorlage entnommen und im Kreislauf geführt werden kann.

Dieser Erfindung liegt ferner die Aufgabe zugrunde die Sperrstoffe auszusondern, den verschmutzten Walzzunderschlamm, ohne Zugabe von Wasch- und Lösungsmittel, von der schlammig bis stichfesten, nicht pumpfähigen Konsistenz, die Eisenanteile als rieselfähigen Sekundärrohstoff und gleichzeitig die Feinst-/Nichteisenanteile mit Ölanteilen in einer Fraktion als Filterkuchen ohne Großkornanteile als direkt wieder verwertbaren Sekundärrohstoffe bereitzustellen. Alle Sekundärrohstoffe sollen ohne weitere Behandlung direkt über die verschiedenen Beschickungsverfahren dem Hochofenprozess zugeführt werden, und im Verhüttungsprozess keine Schäden an Anlagen, wie Abgasfiltereinrichtungen, Rohrleitungen der Kohleeindüsung verursachen. Das Verfahren soll alle störungsanfälligen Behandlungsstufen, wie Zyklone, Rührwerke, Stapelbehälter, Pumpen und Magnetabscheider ausschließen. Des Weiteren sollen durch dieses Verfahren eine Vielzahl an Nachbehandlungsstufen vermieden werden und keine Abfälle bzw. weiter zu behandelnde Stoffe entstehen. Aus wirtschaftlicher Sicht sollen bei möglichst geringen Arbeitsabläufen und einfachen Verfahren der größte mögliche Durchsatz erzielt werden.

Diese Aufgabe wird gelöst durch ein Verfahren zur mechanischen Auftrennung von Sekundärrohstoffen aus eisenhaltigen Schlämmen, das dadurch gekennzeichnet ist, dass das Verfahren folgende Schritte umfasst:
a) Aufgabe des eisenhaltigen Schlamms über einen Aufgabetrichter (1), der mit einem Rechen/Rosteinbau versehen ist und von wo vorhandene Sperrstoffe abgeschieden werden,
b) Konditionierung des Schlamms in einer Mischschnecke (2), in welcher zur Überführung des Schlamms in eine fließfähige Konsistenz Wasser eingedüst wird,
c) Transportieren des Gemisches auf ein Trommelsieb (3) zwecks Klassierung und Eindüsen von Wasser im Trommelsieb, von wo die Eisenanteile >3 mm über einen Siebüberlauf als Sekundärrohstoff (A) abgeführt werden und
d) Leiten der übrigen Suspension in einen Trennbehälter (4), in welchem im Bodenbereich über Luftdüsen (11) Luft und ferner über Düsen (10) Wasser eingedüst wird und der mit Lamellen zur Klärung versehen ist, über einen Überlauf Nichteisenanteile und Feinsteisenschlamm in ein Sedimentationsbecken mit Zellradschleuse (7) geführt werden und von dort einer Kammerfilterpresse (8) zugeführt werden, wo eine Entwässerung und Bildung eines Filterkuchen (C) stattfindet und
e) die sedimentierten Eisenanteile ≤3mm aus dem Trennbehälter (4) durch eine untere Austragsöffnung zu einem Schneckenförderer (5) geleitet und
f) einem Spaltsieb (6) zugeführt wird und eine Entwässerung durchgeführt wird und die Sekundärrohstoffe (B), welche Eisenanteile ≤3mm enthalten, ausgetragen werden.

Es ist vorteilhaft, wenn in den Aufgabetrichter Wasser eingedüst wird.

Vorzugsweise wird das bei der Herstellung der Sekundärrohstoffe A, B und C anfallende Wasser einer Pumpenvorlage zugeführt und im Kreislauf geführt.

Vorzugsweise werden zum Klassieren Siebböden mit unterschiedlicher Maschenweiten im Bereich von 1 bis 3 mm verwendet.

In einer alternativen Ausgestaltung des erfindungsgemäßen Verfahrens wird bei der Aufgabe gemäß Schritt a) der Rechen durch eine Vibrationseinrichtung substituiert und unter Hochdruck Wasser eingedüst und beim Schritt b) anstelle einer Mischschnecke (2) eine Vibrationsrinne (2A) mit Wassereindüsung verwendet.

Ein weiterer Gegenstand der Erfindung ist eine Vorrichtung zur Durchführung des erfindungsgemäßen Verfahrens, welche umfasst einen Aufgabetrichter mit Rechen/Rost (1), einer Mischschnecke (2), einem Trommelsieb (3) mit Überlauf für die Teile >3mm, einem Trennbehälter mit Lamellen zur Klärung, Düsen zum Düsen von Luft und Wasser, einem Überlauf für Nichteisenanteile und Feinsteisenschlamm, einem Sedimentationsbecken mit Zellradschleuse (7), Kammerfilterpresse (8), einem Schneckenförderer (5), einem Spaltsieb (6) sowie einer Pumpenvorlage zum Führen von Wasser im Kreislauf.

In einer alternativen vorteilhaften Ausführungsform der erfindungsgemäßen Vorrichtung weist die Vorrichtung anstelle eines Rechens eine Vibrationseinrichtung und eine Hochdruckwassereindüsung und anstelle der Mischschnecke (2) eine Vibrationsrinne (2A) mit Wassereindüsung auf.

Ein weiterer Gegenstand der Erfindung ist ein Verfahren zur mechanischen Auftrennung von Sekundärrohstoffen aus eisenhaltigen Schlämmen und Direktzuführung der erhaltenen Sekundärrohstoffe A und B zu einer Sinteranlage zur Eisenverhüttung und der aufgetrennten Sekundärrohstoffe C als Filterkuchen zu einer Kohlenmahlanlage, das folgende Schritte umfasst:
a) Aufgabe des eisenhaltigen Schlamms über einen Aufgabetrichter (1), der mit einem Rechen/Rosteinbau versehen ist und von wo vorhandene Sperrstoffe abgeschieden werden,
b) Konditionierung des Schlamms in einer Mischschnecke (2), in welcher zur Überführung des Schlamms in eine fließfähige Konsistenz Wasser eingedüst wird,
c) Transportieren des Gemisches auf ein Trommelsieb (3) zwecks Klassierung und Eindüsen von Wasser im Trommelsieb, von wo die Eisenanteile >3 mm über einen Siebüberlauf als Sekundärrohstoff (A) abgeführt werden und
d) Leiten der übrigen Suspension in einen Trennbehälter (4), in welchem im Bodenbereich über Luftdüsen (11) Luft und ferner über Düsen (10) Wasser eingedüst wird und der mit Lamellen zur Klärung versehen ist, über einen Überlauf Nichteisenanteile und Feinsteisenschlamm in ein Sedimentationsbecken mit Zellradschleuse (7) geführt werden und von dort einer Kammerfilterpresse (8) zugeführt werden, wo eine Entwässerung und Bildung eines Filterkuchen (C) stattfindet und
e) die sedimentierten Eisenanteile ≤3mm aus dem Trennbehälter (4) durch eine untere Austragsöffnung zu einem Schneckenförderer (5) geleitet und
f) einem Spaltsieb (6) zugeführt wird und eine Entwässerung durchgeführt wird und die Sekundänohstoffe (B), welche Eisenanteile ≤3mm enthalten, ausgetragen werden und
g) die erhaltenen Sekundärrohstoffe A und B direkt ohne weitere Behandlung einer Sinteranlage zur Eisenverhüttung zuführt und die aufgetrennten Sekundärrohstoffe C als Filterkuchen für die Kohleneindüsung einer Kohlenmahlanlage direkt zuführt.

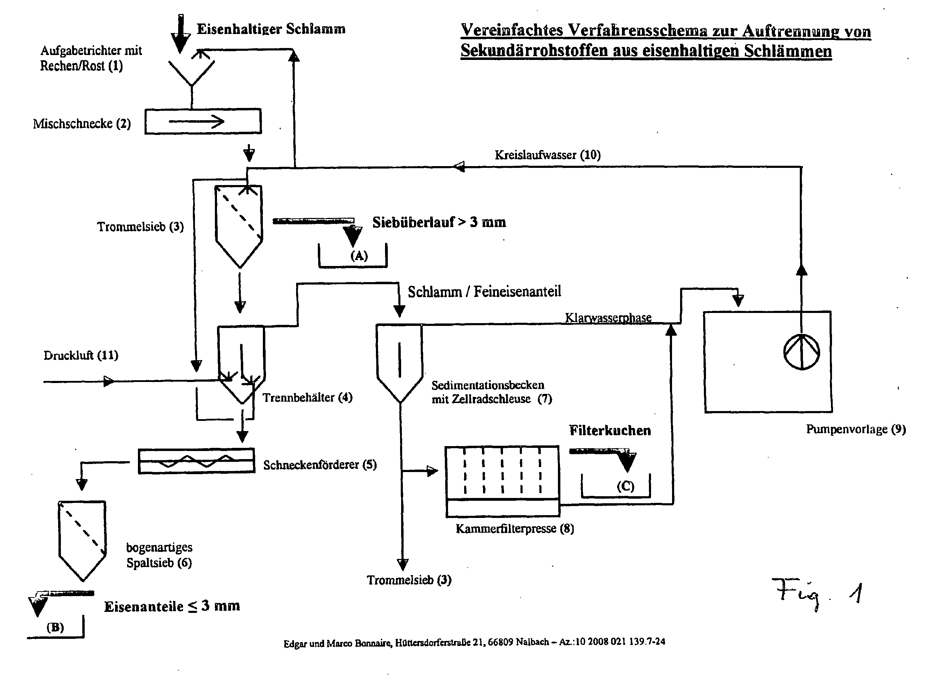

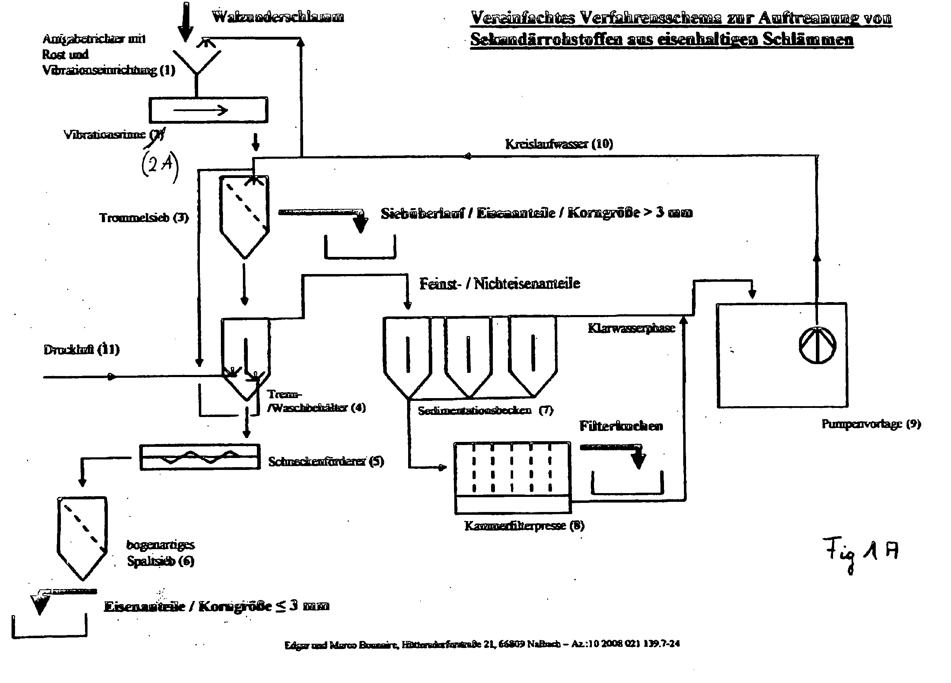

Das erfindungsgemäße Verfahren gemäße der Lehre von Patentanspruch 1 wird beispielhaft anhand der Figur 1 näher erläutert.

Ein pastöser, nicht pumpfähiger Walzzunderschlamm, der Sperrstoffe enthält, wird mittels einer Greifeinrichtung in den Aufgabetrichter (1), der mit einem Rechen/Rosteinbau versehen ist, eingeführt. Hier findet die Abscheidung von Sperrstoffen statt, die vom Prozess abgeschieden werden. Über die Mischschnecke wird das Material zum Trommelsieb geführt. In die Mischschnecke wird Wasser (Kreislaufwasser) eingedüst. Dabei wird der pastöse Schlamm, zumindest teilweise in eine fließfähige Konsistenz konditioniert. Über ein Trommelsieb (3), welches über dem Trennbehälter (4) angeordnet ist, findet eine Klassierung statt. Der Siebboden mit unterschiedlicher Maschenweite ist zur kontrollierten Verteilung der Eisenteile über dem Trennbehälter (4) angeordnet. Hier findet eine Trennung der Eisenanteile in einem Bereich von 1 bis 3mm statt. Im Trommelsieb werden zwecks Konditionierung des fließfähigen Schlamms zu einer Suspension Wasser eingedüst. Dabei werden als Siebdurchgang die Eisenanteile im Bereich bis zu 3mm in den Trennbehälter geführt. Eisenanteile über 3mm werden als Siebüberlauf A ausgetragen.

Der Trennbehälter (4) ist trichterförmig konstruiert und weist in der Trichterspitze eine Trennplatte auf. Der Austrag aus der Trichterspitze erfolgt durch einen Schneckenförderer (5) mit nachgeschaltetem Spaltsieb (6). Innerhalb des Trennbehälters (4) ist eine Lamellenklärung mit Austragsöffnung zur Trichterspitze und einem Überlauf zum Sedimentationsbehälter (7) angeordnet. Im Bodenbereich des Trennbehälters (4) sind Luftdüsen (11) und Wasserdüsen eingebaut, wodurch die Trennung gefördert wird. Im Trennbehälter (4) sinken infolge des Dichteunterschieds die aufgeteilten Eisenanteile ≤3mm zur Trichterspitze ab und werden über einen Schneckenförderer (5) ausgebracht.

Eine Restentwässerung der gereinigten Eisenteile ≤3mm erfolgt über ein Spaltsieb (6). Durch Lufteindüsung (11) werden die Feinsteisenteile und die Nichteisenanteile in den oberen Bereich des Trennbehälters gebracht und über dem Lamellenklärer abgeleitet. Die Ableitung der Feinsteisenanteile und Nichteisenanteile erfolgt in einem Sedimentationsbecken mit Zellradschleuse (7), wobei der Feinsteisenschlamm und die Nichteinsenanteile sedimentieren und über die Zellradschleuse (7) abgeleitet werden. In einer Kammerfilterpresse werden sie zu einem Filterkuchen verarbeitet und das abgeschiedene Wasser wird der Pumpenvorlage (9) zugeführt.

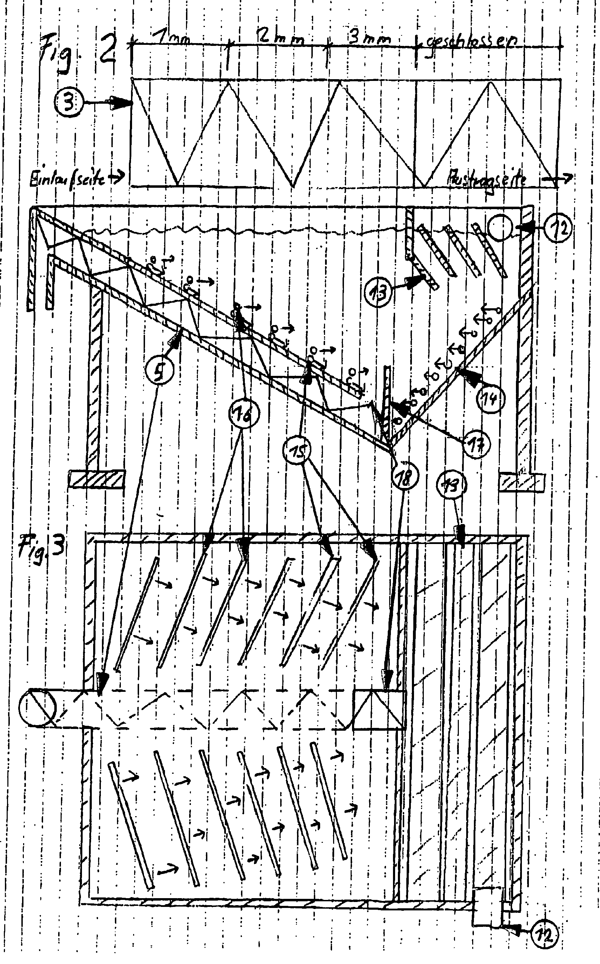

Die Durchführung des weiterentwickelten Verfahrens wird anhand von Figur 1A, Figur 2 und Figur 3 beispielhaft näher erläutert.

Der Verfahrensablauf ist ein Zusammenwirken von verschiedenen Komponenten, welche kontinuierlich und zusammenhängend arbeiten.
Aufgabe (1, 2)
Klassierung (3)
Trenn-/Waschbehälter (4, 5, 6)
Sedimentation (7)
Entwässerung (8)
Pumpenvorlage (9)

Der schlammig bis stichfeste nicht pumpfähige Walzzunderschlamm wird durch Greifervorrichtung in den Aufgabetrichter (1) mit Rost- und Vibrationseinrichtung zur Konditionierung und Abscheidung der Sperrstoffe eingefüllt. Unmittelbar über dem Rost sind umlaufend Wasserdüsen angeordnet. Durch die parallele Eindüsung zum Rost von Kreislaufwasser (10) wird der Walzzunderschlamm in diesem Bereich konditioniert und fließt durch den Rost nach unten ab; weiterer Walzzunderschlamm gelangt zum Rost nach und wird somit kontinuierlich konditioniert und abgeleitet, welches durch die Vibrationseinrichtung unterstützt werden kann. Die Sperrstoffe verbleiben auf dem Rost.

Der Transport des fließfähigen Walzzunderschlammes vom Aufgabetrichter (1) zum Trommelsieb (3) erfolgt über eine Vibrationsrinne (2A), wobei letzte kleinere Verklumpungen durch die Arbeitsweise der Vibrationsrinne (2A) aufgelöst werden. Die anschließende Klassierung erfolgt über ein Trommelsieb (3), welches über dem nach oben offenen Trenn-/Waschbehälter (4) waagerecht angeordnet ist. Der Siebboden ist mit unterschiedlicher Maschenweite von 1mm auf der Beschickungsseite bis 3mm auf der Austragseite bestückt, um eine Verteilung der Eisenanteile/Korngröße ≤3mm im Trennbehälter (4) zu erreichen. Wasserdüsen beaufschlagen im Trommelsieb (3) den Sohlenbereich mit Kreislaufwasser (10) und konditionieren den fließfähigen Walzzunderschlamm zu einer Suspension, welche als Siebdurchgang mit den Eisenanteilen/Korngröße ≤3mm in den Trennbehälter gelangt. Eisenanteile/Korngröße > 3mm werden als größter Mengenanteil abgetrennt, gleichzeitig von letzten Anhaftungen durch die Beaufschlagung von Kreislaufwasser (10) gereinigt, durch eine Wendelschnecke als Siebüberlauf/Eisenanteile/Korngröße > 3mm ausgetragen und kann dem Hochofenprozess ohne weitere Behandlung über die Sinteranlage als Sekundärrohstoff zugeführt werden.

Durch Weiterbehandlung der Suspension im Trenn-/Waschbehälter werden die Eisenanteile/ Korngröße ≤3mm und die Feinst-/Nichteisenschlämme mit Ölanteilen getrennt. Der Boden des rechteckigen Trenn-Waschbehälters (4) ist mit beidseitigem Gefälle in Längsrichtung im Verhältnis 2 : 1 (Bechickungsseite : Austragseite) und einer senkrechten Trennplatte (17) in der Keilspitze ausgestattet. Mittig im Boden der Beschickungsseite ist mit gleichem Gefälle ein oder mehrere Schneckenförderer (5) mit Aufgabeöffnung (18) unmittelbar vor der Trennplatte (17) und Austragöffnung über Oberkante des Trenn-/Waschbehälter (4) und nachgeschaltetem Spaltsieb (6) und am Boden der Beschickungsseite sind Düsenbalken (16) zur Eindüsung von Kreislaufwasser (10) mit Wirkrichtung zur Trennplatte (17) und Aufgabeöffnung (18) des Schneckenförderers (5) und Düsenbalken (15) für Druckluft (11) angeordnet. Im oberen Bereich der Austragseite des Trenn-/Waschbehälters (4) ist ein Lamellenklärer (13) mit Überlauf zu den Sedimentationsbecken (7) und am Boden sind Luftdüsen (14) mit Wirkrichtung zur Trennplatte (17) angeordnet. Die Suspension aus Eisenanteilen/Korngröße ≤3mm, Feinst-/Nichteisenanteilen und Ölanteilen gelangt als Siebdurchgang des Trommelsiebs (3) in den Trenn-/Waschbehälter (4). Die Eisenanteile/Korngröße ≤3mm sinken zum Boden der Beschickungsseite ab wobei die Feinst-/Nichteisenanteile und Ölanteile in der Suspension durch Eindüsung von Druckluft (11) über die Düsenbalken (15) in der Schwebe gehalten werden. Die sedimentierten Eisenanteile/Korngröße ≤3mm werden durch Eindüsung von Kreislaufwasser (10) über die Düsenbalken (16) gewaschen und die mit sedimentierten Feinst-/Nichteisenanteile mit Ölanteilen in den Eisenanteilen/Korngröße ≤3mm werden ausgespült und durch Eindüsung von Druckluft (11) über die Düsenbalken(15) in die Suspension aufgeschwemmt. Gleichzeitig werden die Eisenanteile/Korngröße ≤3mm durch die Eindüsung von Kreislaufwasser (10) und die Anordnung der Düsenbalken (16) und Trennplatte (17) in die Aufgabeöffnung (18) des Schneckenförderers (5) gespült. Die gereinigten Eisenanteile/Korngröße ≤3mm werden durch den Schneckenförderer (5) aus dem Trennbehälter (4) ausgebracht und über ein nachgeschaltetes Spaltsieb (6) restentwässert. Diese Eisenanteile/Korngröße ≤3mm können direkt ohne weitere Behandlung dem Hochofenprozess über die Sinteranlage als Sekundärrohstoff zugeführt werden. Die Suspension aus Feinst-/Nicheisenanteilen und Ölanteilen mit noch mitgeführten Eisenanteilen/Korngröße ≤3mm werden über den integrierten Lamellenklärer (13) zu den Sedimentationsbecken (7) abgeleitet. Die Eisenanteile/Korngröße ≤3 mm werden im Lamellenklärer (13) sedimentiert und sinken zum Boden der Austragseite des Trennbehälters (4) ab. Durch die Beaufschlagung der Luftdüsen (14) mit Wirkrichtung zur Trennplatte (17) mit Druckluft (11) werden die sedimentierten Eisenanteile/Korngröße ≤3mm von der Austragseite in die Suspension der Beschickungsseite des Tenn-/Waschbehälters (4) zurückgeführt. Durch die Trennplatte (17) gelangen keine sedimentierten Feinst-/Nichteisenanteile mit Ölanteile der Austragseite in die Aufgabeöffnung (18) des Schneckenförderers (5) der Beschickungsseite. In den Sedimentationsbecken (7) werden die Feinst-/Nichteisenanteile mit Ölanteilen sedimentiert und über Zellradschleusen kontinuierlich, ohne den Verfahrensablauf zu unterbrechen, ausgebracht. Das Sediment wird zur Entwässerung der Kammerfilterpresse (8) zugeführt. Der Filterkuchen der Kammerfilterpresse (8) kann direkt ohne weitere Behandlung dem Hochofenprozess über die Kohlenaufbereitung/Kohleneindüsung als Sekundärrohstoff zugeführt werden. Die Klarwasserphasen der Sedimentationsbecken (7) und der Kammerfilterpresse (8) werden zur Pumpenvorlage (9) abgeleitet. Das benötigte Kreislaufwasser (10) für das gesamte Verfahren wird mit Pumpen aus der Pumpenvorlage (9) entnommen und im Kreislauf geführt. Die Sekundärrohstoffe, bestehend aus Eisenanteilen/Korngröße ≤3mm, Siebüberlauf/Eisenanteile/Korngröße > 3mm und dem Filterkuchen können ohne weitere Behandlungen zu 100 % dem Hochofenprozess über die Sinteranlage und Kohlenaufbereitung/Kohleeindüsung zugeführt werden. Dieses Verfahren hat weiterhin Vorteil, dass der größte Mengenanteil an Sekundärrohstoffen = Siebüberlauf/Eisenanteile/Korngröße > 3mm, direkt nach der Konditionierung über das Trommelsieb ausgebracht wird.

Beim 3-monatigen Betrieb einer Versuchsanlage mit ca. 20cbm Nutzinhalt wurde bei der Behandlung von Walzzunderschlämmen eines Hüttenwerks, wie eingangs beschrieben, ein Std.-Durchsatz von 7,5 to erreicht. Die erhaltenen Sekundärrohstoffe konnten zu 100% dem Hochofenprozess des Hüttenwerks ohne weitere Behandlung zugeführt werden.

### Mengenanteile

| | |
|---|---|
| Siebüberlauf/Eisenanteile/Korngröße >3mm | ca. 55 % |
| Eisenanteile/Korngröße ≤3mm | ca. 20 % |
| Filterkuchen | ca. 25 % |

### Ölanteile

| | |
|---|---|
| Walzzunderschlamm | ca. 0,28 % |
| Eisenanteile/Korngröße ≤3mm | ca. 0,07 % |
| Siebüberlauf/Eisenanteile/Korngröße >3mm | ca. 0,14 % |
| Filterkuchen | ca. 0,58 % |

## Patentansprüche

1. Verfahren zur mechanischen Auftrennung von Sekundärrohstoffen aus eisenhaltigen Schlämmen, **dadurch gekennzeichnet, dass** das Verfahren folgende Schritte umfasst:
a) Aufgabe des eisenhaltigen Schlamms über einen Aufgabetrichter (1), der mit einem Rechen/Rosteinbau versehen ist und von wo vorhandene Sperrstoffe abgeschieden werden,
b) Konditionierung des Schlamms in einer Mischschnecke (2), in welcher zur Überführung des Schlamms in eine fließfähige Konsistenz Wasser eingedüst wird,
c) Transportieren des Gemisches auf ein Trommelsieb (3) zwecks Klassierung und Eindüsen von Wasser im Trommelsieb, von wo die Eisenanteile > 3 mm über einen Siebüberlauf als Sekundärrohstoff (A) abgeführt werden und,
d) Leiten der übrigen Suspension in einen Trennbehälter (4), in welchem im Bodenbereich über Luftdüsen (11) Luft und ferner über Düsen (10) Wasser eingedüst wird und der mit Lamellen zur Klärung versehen ist, über einen Überlauf Nichteisenanteile und Feinsteisenschlamm in ein Sedimentationsbecken mit Zellradschleuse (7) geführt werden und von dort einer Kammerfilterpresse (8) zugeführt werden, wo eine Entwässerung und Bildung eines Filterkuchen (C) stattfindet und
e) die sedimentierten Eisenanteile ≤3mm aus dem Trennbehälter (4) durch eine untere Austragsöffnung zu einem Schneckenförderer (5) geleitet und
f) einem Spaltsieb (6) zugeführt wird und eine Entwässerung durchgeführt wird und die Sekundärrohstoffe (B), welche Eisenanteile ≤3mm enthalten, ausgetragen werden.

2. Verfahren nach Anspruch 1, **dadurch gekennzeichnet, dass** in den Aufgabetrichter Wasser eingedüst wird.

3. Verfahren nach Anspruch 1 oder 2, **dadurch gekennzeichnet, dass** bei der Herstellung der Sekundärrohstoffe A, B und C anfallende Wasser einer Pumpenvorlage zugeführt und im Kreislauf geführt.

4. Verfahren nach mindestens einem der Ansprüche 1-3, **dadurch gekennzeichnet, dass** zum Klassieren ein Trommelsieb mit Siebböden mit unterschiedlicher Maschenweiten im Bereich von 1 bis 3 mm verwendet werden.

5. Verfahren zur mechanischen Aufbrennung von Sekundärrohstoffen aus eisenhaltigen Schlämmen, **dadurch gekennzeichnet, dass** das Verfahren folgende Schritte umfasst:
a) Aufgabe des eisenhaltigen Schlammes über einen Aufgabetrichter (1), der mit einer Vibrationseinrichtung versehen ist und unter Hochdruck Wasser eingedüst wird und von wo vorhandene Sperrstoffe abgeschieden werden
b) Konditionierung des Schlammes in einer Vibrationsrinne (2A) mit Wassereindüsung,
c) Transportieren des Gemisches auf ein Trommelsieb (3) zwecks Klassierung und Eindüsen von Wasser im Trommelsieb, von wo die Eisenanteile > 3 mm über einen Siebüberlauf als Sekundärrohstoff (A) abgeführt werden und,
d) Leiten der übrigen Suspension in einen Trennbehälter (4), in welchem im Bodenbereich über Luftdüsen (11) Luft und ferner über Düsen (10) Wasser eingedüst wird und der mit Lamellen zur Klärung versehen ist, über einen Überlauf Nichteisenanteile und Feinsteisenschlamm in ein Sedimentationsbecken mit Zelkadschleuse (7) geführt werden und von dort einer Kammerfilterpresse (8) zugeführt werden, wo eine Entwässerung und Bildung eines Filterkuchen (C) stattfindet und
e) die sedimentierten Eisenanteile ≤3mm aus dem Trennbehälter (4) durch eine untere Austragsöffnung zu einem Schneckenförderer (5) geleitet und
f) einem Spaltsieb (6) zugeführt wird und eine Entwässerung durchgerührt wird und die Sekundärrohstoffe (B), welche Eisenanteile ≤3mm enthalten, ausgetragen werden.

6. Vorrichtung zur Durchführung des Verfahrens nach mindestens einem der Ansprüche 1-4, welche umfasst einen Aufgabetrichter mit Rechen/Rost (1), einer Mischschnecke (2), einem Trommelsieb (3) mit Überlauf für die Teile >3mm, einem Trennbehälter mit Lamellen zur Klärung, Düsen zum Düsen von Luft und Wasser, einem Überlauf für Nichteisenanteile und Feinsteisenschlamm, einem Sedimentationsbecken mit Zellradschleuse (7), Kammerfilterpresse (8), einem Schneckenförderer (5), einem Spaltsieb (6) sowie einer Pumpenvorlage zum Führen von Wasser im Kreislauf.

7. Vorrichtung zur Durchführung des Verfahrens nach Anspruch 5, **dadurch gekennzeichnet, dass** die Vorrichtung einen Aufgabetrichter mit Vibrationseinrichtung und eine Hochdruckwassereindüsung aufweist sowie eine Vibrationsrinne (2A) mit Wassereindüsung, ein Trommelsieb (3) mit Überlauf für die Teile > 3mm, einem Trennbehälter mit Lamellen zur Klärung, Düsen zum Düsen von Luft und Wasser, einem Überlauf für Nichteisenanteile und Feinsteisenschlamm, einem Sedimentationsbecken mit Zellradschleuse (7), Kammerfilterpresse (8), einem Schneckenförderer (5), einem Spaltsieb (6) sowie einer Pumpenvorlage zum Führen von Wasser im Kreislauf.

8. "Verfahren nach mindestens einem der Ansprüche 1 bis 5, **dadurch gekennzeichnet, dass** man die mechanische Auftrennung zunächst nach einem Verfahren der Ansprüche 1 bis 5 durchführt und die erhaltenen Sekundärrohstoffe A und B direkt ohne weitere Behandlung über eine Sinteranlage zur Eisenverhüttung führt und die aufgetrennten Sekundärrohstoffe C als Filterkuchen für die Kohleneindüsung direkt ohne weitere Behandlung einer Kohlenmahlanlage zuführt."

## Claims

1. Process for the mechanical separation of secondary raw materials from ferrous sludge, **characterised by** the fact that the process includes the following steps:
a) Feeding the ferrous sludge through a feeding hopper (1), which is equipped with a grate/mounted grill and from which existing barrier materials are separated,
b) Conditioning the sludge in a mixing screw (2), into which water is injected to transfer the sludge in a flowing consistency,
c) Transportation of the mixture to a drum screen (3) for the purpose of screening and injecting water into the drum screen, from which the Iron content > 3 mm is discharged through a screen overflow as secondary raw material (A) and,
d) Channelling the remaining suspension to a separator (4), in which air is injected into the floor level through air nozzles (11) and water is also injected through nozzles (10), and which is equipped with fins for purification, non-iron content and fine Iron sludge is channelled through an overflow to a sedimentation basin with rotary feeder (7) and channelled from there to a chamber filter press (8), where drainage and the formation of a filter cake (C) takes place and
e) the sediment Iron content ≤ 3 mm is channelled from the separator (4) through a lower discharge opening to a screw conveyor (5) and
f) a slot screen (6) and drainage takes place and the secondary raw materials (B), which contain Iron content ≤ 3 mm, are discharged.

2. Process according to claim 1, **characterised by** the fact that water is injected into the feeding hopper.

3. Process according to claim 1 or 2, **characterised by** the fact that water is fed to a pump device and channelled into circulation when producing secondary raw materials A, B and C.

4. Process according to at least one of the claims 1-3, **characterised by** the fact that screen drums with sieve plates with different mesh sizes in the range from 1 to 3 mm are used to screen.

5. Process for the mechanical separation of secondary raw materials from ferrous sludge, **characterised by** the fact that the process includes the following steps:
a. Feeding the ferrous sludge through a feeding hopper (1), which is equipped with a vibration device and is injected with water under high pressure and from which existing barrier materials are separated,
b. Conditioning the sludge In a vibration conveyor (2A) with water injection.
c. Transportation of the mixture to a drum screen (3) for the purpose of screening and injecting water into the drum screen, from which the iron content > 3 mm is discharged through a screen overflow as secondary raw material (A) and,
Channelling the remaining suspension to a separator (4), in which air is injected into the floor level through air nozzles (11) and water is also injected through nozzles (10), and which is equipped with fins for purification, non-iron content and fine iron sludge is channelled through an overflow to a sedimentation basin with rotary feeder (7) and channelled from there to a chamber filter press (8), where drainage and the formation of a filter cake (C) takes place and
e) the sediment iron content ≤ 3 mm is channelled from the separator (4) through a lower discharge opening to a screw conveyor (5) and
f) a slot screen (6) and drainage takes place and the secondary raw materials (B), which contain iron content ≤ 3 mm, are discharged.

6. Apparatus for executing the process according to at least one of the claims 1-4, which includes a feeding hopper with a grate/mounted grill (1), a mixing screw (2), a drum screen (3) with an overflow for content >3mm, a separator with fins for purification, air nozzles for the flow of air and water, an overflow for non-iron content and fine iron sludge, a sedimentation basin with rotary feeder (7), a chamber filter press (8), a screw conveyor (5), a slot screen (6) and a pump device for channelling water into circulation.

7. Apparatus for executing the process according to claim 5, **characterised by** the fact that the apparatus exhibits a feeding hopper with a vibration device and a high pressure water injection as well as a vibration conveyor (2A) with water Injection, a drum screen (3) with overflow for content > 3mm, a separator with fins for purification, air nozzles for the flow of air and water, an overflow for non-iron content and fine iron sludge, a sedimentation basin with rotary feeder (7), a chamber filter press (8), a screw conveyor (5), a slot screen (6) and a pump device for channelling water into circulation.

8. "Process according to at least one of the claims 1 to 5, **characterised by** the fact that one Initially executes the mechanical separation according to a process from claims 1 to 5 and the obtained secondary raw materials A and B are channelled directly through a sintering plant for iron smelting without further treatment and the separated secondary raw materials C are directly channelled as filter cakes for coal injection to a coal mill facility without further treatment."

## Revendications

1. Procédé pour la séparation mécanique des matières premières secondaires de boues contenant du fer, **caractérisé en ce que** le procédé comprend les étapes suivantes ;
a) Chargement de la boue contenant du fer par l'intermédiaire d'une trémie de chargement (1) qui est munie d'un dégrilleur/montage de grilles et à partir d'où les matières volumineuses présentes se séparent,
b) Conditionnement de la boue dans une vis mélangeuse (2), dans laquelle on injecte de l'eau pour conférer à la boue une consistance fluide,
c) Transport du mélange sur un tamis à tambour (3) à des fins de criblage et d'injection d'eau dans le tamis à tambour, à partir d'où les parts de fer > 3 mm sont évacuées à titre de matière première secondaire (A) par l'intermédiaire d'un trop plein de tamis, et
d) Acheminement du reste de la suspension dans un conteneur de séparation (4) dans lequel on injecte dans la zone du fond de l'air par l'intermédiaire de buses d'air (11) et, par ailleurs, de l'eau par l'intermédiaire de buses (10), et qui est muni de lamelles de clarification, dans lequel les parts non ferreuses et la boue de fer très fine sont conduites par l'intermédiaire d'un trop plein dans un bassin de sédimentation avec écluse à roue cellulaire (7) et, à partir de là, amenées à un filtrre-presse à chambre (8) où s'effectuent une déshumidification et la formation d'un gâteau de filtration (C), et
e) où les parts de fer sédimentées ≤ 3 mm provenant du conteneur de séparation (4) sont conduites par un orifice d'évacuation inférieur vers un convoyeur à vis sans fin (5) et
f) amenées à un tamis à fentes (6), où une déshumidification s'effectue et où les matières premières secondaires (B), qui contiennent des parts de fer ≤ 3 mm, sont évacuées.

2. Procédé selon revendication 1, **caractérisé en ce que** l'on injecte de l'eau dans la trémie de chargement.

3. Procédé selon revendication 1 ou 2, **caractérisé en ce que** l'eau produite lors de la réalisation des matières premières secondaires A, B et C est amenée à une réserve de pompe et conduite dans le circuit.

4. Procédé selon au moins l'une des revendications 1-3, **caractérisé en ce que** l'on utilise, pour le criblage, un tamis à tambour avec fonds de tamisage dans différentes largeurs de maille dans la plage de 1 à 3 mm.

5. Procédé pour la séparation mécanique des matières premières secondaires de boues contenant du fer, **caractérisé en ce que** le procédé comprend les étapes suivantes :
a) Chargement de la boue contenant du fer par l'intermédiaire d'une trémie de chargement (1) qui est munie d'un dispositif vibrant et injecté d'eau à haute pression et à partir d'où et à partir d'où les matières volumineuses présentes se séparent
b) Conditionnement de la boue dans une goulotte vibrante (2A) avec injection d'eau,
c) Transport du mélange sur un tamis à tambour (3) à des fins de criblage et d'injection d'eau dans le tamis à tambour, à partir d'où les parts de fer > 3 mm sont évacuées à titre de matière première secondaire (A) par l'intermédiaire d'un trop plein de tamis, et
d) Acheminement du reste de la suspension dans un conteneur de séparation (4) dans lequel on injecté dans la zone du fond de l'air par l'intermédiaire de buses d'air (11) et, par ailleurs, de l'eau par l' intermédiaire de buses (10), et qui est muni de lamelles de clarification, dans lequel les parts non ferreuses et la boue de fer très fine sont conduites par l'intermédiaire d'un trop plein dans un bassin de sédimentation avec écluse à roue cellulaire (7) et, à partir de là, amenées à un filtre-presse à chambre (8) où s'effectuent une déshumidification et la formation d'un gâteau de filtration (C), et
e) où les parts de fer sédimentées ≤ 3 mm provenant du conteneur de séparation (4) sont conduites par un orifice d'évacuation inférieur vers un convoyeur à vis sans fin (5) et
f) amenées à un tamis à fentes (6), où une déshumidification s'effectue et où les matières premières secondaires (B), qui contiennent des parts de fer ≤ 3 mm, sont évacuées.

6. Dispositif pour la réalisation du procédé selon au moins l'une des revendications 1-4, qui comprend une trémie de chargement avec dégrilleur/grille (1), une vis mélangeuse (2), un tamis à tambour (3) avec trop plein pour les parties > 3 mm, un conteneur de séparation avec lamelles pour la clarification, des buses pour l'injection d'air et d'eau, un trop plein pour les parts non ferreuses et la boue de fer très fine, un bassin de sédimentation avec écluse à roue cellulaire (7), un filtre-presse à chambre (8), un convoyeur à vis sans fin (5), un tamis à fentes (6), de même qu'une réserve de pompe pour la conduite d'eau dans le circuit.

7. Dispositif pour la réalisation du procédé selon revendication 5, **caractérisé en ce que** le dispositif présente une trémie de chargement avec dispositif vibrant et une injection d'eau à haute pression, de même qu'une goulotte vibrante (2A) avec injection d'eau, un tamis à tambour (3) avec trop plein pour les parties > 3 mm, un conteneur de séparation avec lamelles pour la clarification, des buses pour injection d'air et d'eau, un trop plein pour les parts non ferreuses et la boue de fer très fine, un bassin de sédimentation avec écluse à roue cellulaire (7), un filtre-presse à chambre (8), un convoyeur à vis sans fin (5), un tamis à fentes (6), de même qu'une réserve de pompe pour la conduite d'eau dans le circuit.

8. "Procédé selon au moins l'une des revendications 1 à 5, **caractérisé en ce que** l'on réalise la séparation mécanique tout d'abord selon un procédé des revendications 1 à 5 et que l'on conduit les matières premières secondaires A et B obtenues vers le haut-fourneau, directement, sans autre traitement et par l'intermédiaire d'une installation de frittage, et que les matières premières secondaires C séparées sont amenées directement et sans autre traitement à une installation de broyage du charbon, en tant que gâteau de filtration pour l'injection de charbon."
